# EUROPEAN PATENT SPECIFICATION

(11) **EP 4 229 113 B1**
(45) Date of publication and mention of the grant of the patent: **18.09.2024**
(21) Application number: 21786829.8
(22) Date of filing: 30.09.2021
(51) Int. Cl.: C08G 65/334, C08G 65/00, C08G 65/333, C08G 65/337, C08L 71/00, C08G 65/336

(54) **NOVEL (PER)FLUOROPOLYETHER POLYMERS AND USE THEREOF**
NEUARTIGE (PER)FLUORPOLYETHERPOLYMERE UND VERWENDUNG DAVON
NOUVEAUX POLYMÈRES (PER)FLUOROPOLYÉTHER ET LEUR UTILISATION

(30) Priority: 14.10.2020 EP 20201713
(43) Date of publication of application: 23.08.2023
(73) Proprietor: Solvay Specialty Polymers Italy S.p.A., 20021 Bollate (MI) (IT)
(72) Inventor: THOMSON, Mary, 20133 Milano MI (IT); FONTANA, Simonetta Antonella, 20142 Milano MI (IT); LOTIERZO, Andrea, 20861 Brugherio MB (IT)
(74) Representative: Ferri, Isabella
(86) International application number: PCT/EP2021/076929
(87) International publication number: WO 2022/078767

(56) References cited:
- EP-A1- 3 312 242
- WO-A1-2016/079195
- WO-A1-2019/106366

## Description

### Cross-reference to related patent applications

This application claims the priority of patent application filed on 14 October 2020 in EUROPE with Nr. 20201713.

### Technical Field

The present invention relates to compositions comprising novel (per)fluoropolyether polymers, endowed with antimicrobial properties, to methods for the manufacture thereof and to their use to provide compositions having antimicrobial properties.

### Background Art

The use of (per)fluoropolyether (PFPE) polymers as ingredients in the manufacture of anti-soil coating compositions, for coating different types of substrates is known in the art. For example, EP 3312242 (3M Innovative Properties Company) discloses protective coating compositions with mixed functionalities, wherein PFPE are mentioned among other backbones; WO 2016/079195 (Solvay Specialty polymers Italy S.p.A.) discloses zwitterionic derivatives of PFPE, which are disclosed as suitable for coating applications; WO 2019/106366 (Sphere Fluidic Limited) discloses surfactants comprising perfluoropolyether structure.

Among the others, the coating of security documents, such as notably banknotes, using such PFPE polymers was disclosed for example in WO 2012/055885 (Oberthur Fiduciaire SAS) and WO 2013/045496 (Oberthur Fiduciaire SAS, Solvay Specialty Polymers Italy S.p.A.).

Coatings having anti-bacterial and/or anti-viral properties have been also disclosed in the art, for example in JP2014237227 (Central Glass Co.), TW201512339 (Alpha Bright Int. Co., LTD.), US 2015/191608 (Industrial Academic Cooperation Group Seoul National University; Samsung Electronics CO., LTD.; Snu R And DB Foundation); WO 2016/153230 (Ceko Co., LTD.); CN105176342 (Xiamen Boensi Applic Material Science and Technology CO., LTD.).

However, the recent spread of coronavirus disease (COVID-19) caused by severe acute respiratory syndrome coronavirus 2 (SARS-CoV-2) increased the importance of developing compositions endowed with antimicrobial properties (including but not limited to anti-bacterial, anti-viral and antifungal properties), such compositions being suitable for coating a wide variety of substrates, including notably paper, banknotes, glass and plastic, notably for electronic and smart devices.

### Summary of invention

Within this frame, the Applicant faced the problem of developing novel polymers endowed with antimicrobial properties.

More in particular, the Applicant developed novel (per)fluoropolyether (PFPE) polymers endowed with antimicrobial properties, said properties being provided by specific functional group(s) bonded to the (per)fluoropolyether backbone.

Advantageously, the chemical structure of the novel PFPE polymers according to the present invention is such that the polymers are endowed with antimicrobial properties, while providing the properties of coatings, such as notably transparency together with water- and oil-repellency.

Thus, in a first aspect, the present invention relates to a (per)fluoropolyether polymer [(polymer (P^{P})] comprising a (per)fluoropolyether chain [chain (R_{pf})] having two chain ends [chains (Re)] bonded to opposite sides of said chain (R_{pf}), wherein :
- a first chain end comprises at least one group comprising a quaternary ammonium salt group [group (N⁺)] and at least one group selected in the group consisting of : alkoxysilane [group (Si)] and cross-linkable group, preferably selected from unsaturated moiety [group (U)] and epoxy [group (E)]; and
- the second chain end comprises either a perfluoroalkyl group or a quaternary ammonium salt group [group (N⁺)] and at least one group selected in the group consisting of : alkoxysilane [group (Si)] and cross-linkable group, preferably selected from unsaturated moiety [group (U)] and epoxy [group (E)].

In a preferred aspect, the present invention relates to a bifunctional (per)fluoropolyether polymer [polymer (P^{P-bif})] comprising a (per)fluoropolyether chain [chain (R_{pf})] having two chain ends [chains (Re)] bonded to opposite sides of said chain (R_{pf}), wherein both chain ends comprise at least one group comprising a quaternary ammonium salt group [group (N⁺)] and at least one group selected in the group consisting of : alkoxysilane [group (Si)] and cross-linkable group, preferably selected from unsaturated moiety [group (U)] and epoxy [group (E)].

In another preferred aspect, the present invention relates to a monofunctional (per)fluoropolyether polymer [polymer (P^{P-monof})] comprising a (per)fluoropolyether chain [chain (R_{pf})] having two chain ends [chains (Re)] bonded to opposite sides of said chain (R_{pf}), wherein one chain end bears one perfluoroalkyl group and the other chain end comprises at least one quaternary ammonium salt group [group (N⁺)] and at least one group selected in the group consisting of: alkoxysilane [group (Si)] and cross-linkable group, preferably selected from unsaturated moiety [group (U)] and epoxy [group (E)].

Each of the above mentioned polymer (P^{P-bif}) and polymer (P^{P-monof}) are advantageously provided as polymers per se or in a composition comprising a mixture of the two polymers.

Thus, in a further aspect, the present invention relates to a composition [composition (C^{P})] comprising :
- a (per)fluoropolyether polymer [polymer (P^{P-bif})] comprising a (per)fluoropolyether chain [chain (R_{pf})] having two chain ends [chains (Re)] bonded to opposite sides of said chain (R_{pf}), wherein both chain ends comprise at least one group comprising a quaternary ammonium salt group [group (N⁺)] and at least one group selected in the group consisting of : alkoxysilane [group (Si)] and cross-linkable group, preferably selected from unsaturated moiety [group (U)] and epoxy [group (E)]; and
- a (per)fluoropolyether polymer [polymer (P^{P-monof})]comprising a (per)fluoropolyether chain [chain (R_{pf})] having two chain ends [chains (Re)] bonded to opposite sides of said chain (R_{pf}), wherein one chain end bears one perfluoroalkyl group and the other chain end comprises at least one quaternary ammonium salt group [group (N⁺)] and at least one group selected in the group consisting of: alkoxysilane [group (Si)] and cross-linkable group, preferably selected from unsaturated moiety [group (U)] and epoxy [group (E)].

According to another preferred embodiment, said composition (C^{P}) comprises up to 85 wt.%, preferably up to 95 wt.% and even more preferably up to 99 wt.% of said polymer (P^{P-bif}), the remaining part up to 100 wt.% of said composition (C^{P}) being provided either by said polymer (P^{P-monof}) or by side-products of the chemical reaction.

Composition (C^{P}) of the invention can be used as such to provide a coating having antimicrobial properties or it can be used as antimicrobial ingredient (also referred to as "additive") in a solvent [solvent (S)].

Thus, in a second aspect, the present invention relates to a composition [composition (DIL)] comprising composition (C^{P}) as defined above and at least one solvent [solvent (S)] selected in the group comprising : (per)fluorinated fluids, optionally comprising at least one unsaturated moiety; hydrogenated fluids, optionally comprising at least one unsaturated moiety.

In a third aspect, the present invention relates to the use of composition (C^{P}) or composition (DIL) as described above, to impart antimicrobial properties to a substrate.

### Description of embodiments

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural from, depending on the context;
- the term "(per)fluoropolyether" is intended to indicate fully or partially fluorinated polyether polymer;
- the expression "polymer (P^{P})" is intended to indicate both polymer (P^{P-bif}) and polymer (P^{P-monof}) unless otherwise specified;
- the expression "endowed with antimicrobial properties" is intended to indicate that the polymer is capable of killing or stopping the growth of microorganism, such as bacteria, virus and fungi.

Preferably, in polymer (P^{P}), said chain (R_{pf}) is a chain of formula

-D-(CFX^{#})_{z1}-O(R_{f})(CFX*)_{z2}-D*-

wherein
z1 and z2, equal or different from each other, are equal to or higher than 1;
X^{#} and X*, equal or different from each other, are -F or -CF₃, provided that when z1 and/or z2 are higher than 1, X^{#} and X* are -F;
D and D*, equal or different from each other, are a sigma bond, an alkylene chain comprising from 1 to 6 and even more preferably from 1 to 3 carbon atoms, said alkyl chain being optionally substituted with at least one perfluoroalkyl group comprising from 1 to 3 carbon atoms;
(R_{f}) comprises, preferably consists of, repeating units R°, said repeating units being independently selected from the group consisting of:
   (i) -CFXO-, wherein X is F or CF₃;
   (ii) -CFXCFXO-, wherein X, equal or different at each occurrence, is F or CF₃, with the proviso that at least one of X is -F;
   (iii) -CF₂CF₂CW₂O-, wherein each of W, equal or different from each other, are F, Cl, H;
   (iv) -CF₂CF₂CF₂CF₂O-;
   (v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃ and T being a C₁-C₃ perfluoroalkyl group.

Preferably, z1 and z2, equal or different from each other, are from 1 to 10, more preferably from 1 to 6 and even more preferably from 1 to 3.

More preferably, D and D*, equal or different from each other, are a sigma bond, or a chain of formula -CH₂-, -CH₂CH₂- or -CH(CF₃)-.

Preferably, chain (R_{f}) complies with the following formula:

(R_{f}-I) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2 , g3, and g4, equal or different from each other, are independently integers ≥0, such that g1+g2+g3+g4 is in the range from 2 to 300, preferably from 2 to 100; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

wherein:
- a1 and a2 are independently integers ≥ 0 such that the number average molecular weight is between 400 and 10,000, preferably between 400 and 5,000; both a1 and a2 are preferably different from zero, with the ratio a1/a2 being preferably comprised between 0.1 and 10;

   (R_{f}-IIB) -[(CF₂CF₂O)_{b1}(CF₂O)_{b2}(CF(CF₃)O)_{b3}(CF₂CF(CF₃)O)_{b4}]-

   wherein:
   b1, b2, b3, b4, are independently integers ≥ 0 such that the number average molecular weight is between 400 and 10,000, preferably between 400 and 5,000; preferably b1 is 0, b2, b3, b4 are > 0, with the ratio b4/(b2+b3) being ≥1;

   (R_{f}-IIC) -[(CF₂CF₂O)_{c1}(CF₂O)_{c2}(CF₂(CF₂)_{cw}CF₂O)_{c3}]-

   wherein:
   cw = 1 or 2;
   c1, c2, and c3 are independently integers ≥ 0 chosen so that the number average molecular weight is between 400 and 10,000, preferably between 400 and 5,000; preferably c1, c2 and c3 are all > 0, with the ratio c3/(c1+c2) being generally lower than 0.2;

      (R_{f}-IID) -[(CF₂CF(CF₃)O)_{d}]-

      wherein:
      d is an integer > 0 such that the number average molecular weight is between 400 and 10,000, preferably between 400 and 5,000;

      (R_{f}-IIE) -[(CF₂CF₂C(HaI*)₂O)ₑ₁-(CF₂CF₂CH₂O)ₑ₂-(CF₂CF₂CH(Hal*)O)ₑ₃]-

      wherein:
      - Hal*, equal or different at each occurrence, is a halogen selected from fluorine and chlorine atoms, preferably a fluorine atom;
      - e1, e2, and e3, equal to or different from each other, are independently integers ≥ 0 such that the (e1+e2+e3) sum is comprised between 2 and 300.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 400 and 10,000, preferably between 400 and 5,000, with the ratio a1/a2 being generally comprised between 0.1 and 10, more preferably between 0.2 and 5.

Preferably, group (N⁺) is preferably selected in the group comprising, more preferably consisting of:

(N⁺-I) -N⁺(R^{h1})(R^{h2})(R^{h3})

wherein
each of R^{h1}, R^{h2}, and R^{h3} is independently selected from linear or branched alkyl chain having from 1 to 20, more preferably from 1 to 18, and even more preferably from 3 to 18 carbon atoms, said alkyl chain being optionally substituted with one or more -OH groups; benzyl or at least two of R^{h1}, R^{h2}, and R^{h3} together with the nitrogen atom form an aliphatic ring comprising 4 or 5 carbon atoms and the nitrogen atom.

Preferably, at least one of R^{h1}, R^{h2}, and R^{h3} is a linear or branched alkyl chain having from 6 to 20, more preferably from 6 to 18 carbon atoms.

Preferably, at least two of R^{h1}, R^{h2}, and R^{h3} are independently a linear or branched alkyl chain having from 1 to 6, more preferably from 1 to 4 carbon atoms. Preferably, any of polymer (P^{P-bif}) and polymer (P^{P-monof}) comprises a counter-ion for said group (N⁺).

More preferably, said counter-ion is selected from halogen atom, such as chlorine, iodine, bromine; mesylate and tosylate. Halogen atom is more preferred.

Preferably, in any of polymer (P^{P}), polymer (P^{P-bif}) and polymer (P^{P-monof}), the chain(s) (Re) is(are) bonded to said chain (R_{pf}) via a sigma bond or via a poly(oxy)alkylene chain [chain (Rₐ)].

More preferably, said chain (Rₐ) comprises from 1 to 50 fluorine-free oxyalkylene units, said units being the same or different each other and being selected from -OCH(J)CH(J*)-, wherein each of J and J* is independently selected from hydrogen atom, straight or branched alkyl or aryl, preferably hydrogen atom, methyl, ethyl or phenyl.

Preferably, any of polymer (P^{P}), polymer (P^{P-bif}) and polymer (P^{P-monof}) comprises at its chain end(s) said group (U).

Preferably, said group (U) is selected in the group consisting of:

(U-I) -O-C(=O)-CR_{H}=CH₂

(U-II) -O-C(=O)-NH-CO-CR_{H}=CH₂

(U-III) -O-C(=O)-R^{A}-CR_{H}=CH₂

wherein
R_{H} is H or a C₁-C₆ alkyl group;
R^{A} is selected from the group consisting of (R^{A}-I) and (R^{A}-II): 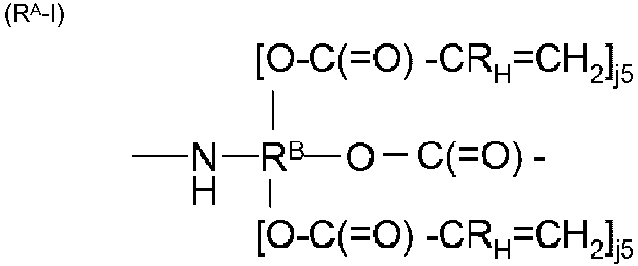 wherein
   each of j5 is independently 0 or 1 and
   R^{B} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; 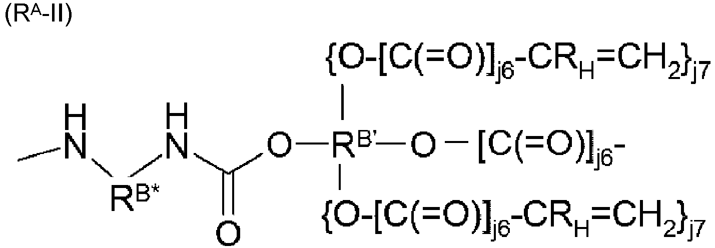 wherein
      j6 is 0 or 1;
      each of j7 is independently 0 or 1;
      R^{B'} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; and R^{B}* has the same meanings defined above for R^{B'} or it is a
      group of formula (R^{B}-I): 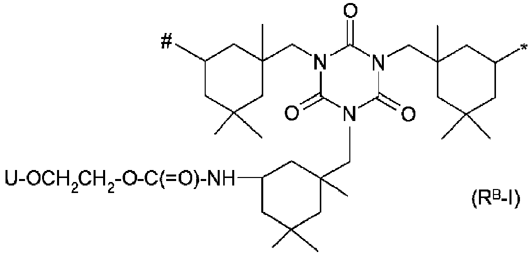 wherein
         substituent U is selected from the groups (U-I) to (U-III) as defined above
            and
         * and # indicate the bonding site to the nitrogen atoms in formula (R^{A}-II) above.

Preferably, when said chains (Re) comprise group (U), said chains (Re) are bonded to said chain (R_{pf}) via group of formula :

* -R¹⁰-NH-C(=O)-O-R¹¹- #

wherein
* indicate the bond to group (U)
# indicate the bond to chain (R_{pf})
R¹⁰ is a linear or branched alkyl chain having from 1 to 6 carbon atoms, optionally substituted with a group comprising a tri-alkoxy-silyl group; R¹¹ is a sigma bond or a poly(oxy)alkylene chain [chain (Rₐ^)], wherein said chain (Rₐ^) comprises from 1 to 50 fluorine-free oxyalkylene units, said units being the same or different each other and being selected from -CH(J*)CH(J)-O, wherein each of J and J* is independently selected from hydrogen atom, straight or branched alkyl or aryl, preferably hydrogen atom, methyl, ethyl or phenyl.

According to an alternative embodiment, each of polymer (P^{P-bif}) and polymer (P^{P-monof}) comprises at its chain end(s) group (Si).

Preferably, said group (Si) is a group of formula:

-Si-(OR³⁰)₃

wherein R³⁰ is a linear or branched alkyl chain having from 1 to 12 carbon atoms.

Polymer (P^{P-bif}) as defined above can be advantageously prepared starting from (per)fluoropolyether (PFPE) polymers [PFPE polymer (bif)] comprising a (per)fluoropolyether chain [chain (R_{pf})] having two chain ends bonded to opposite sides of said chain (R_{pf}), wherein both chain ends comprises at least one -OH group.

Polymer (P^{P-monof}) as defined above can be advantageously prepared starting from (per)fluoropolyether (PFPE) polymers [PFPE polymer (monof)] comprising a (per)fluoropolyether chain [chain (R_{pf})] having two chain ends bonded to opposite sides of said chain (R_{pf}), wherein one of said chain ends comprises at least one -OH group and the other chain end comprises a perfluoroalkyl group.

The polymers (P^{P-bif}) and (P^{P-monof}) of the invention, as well as the composition containing the same can be prepared starting from reactants and according to methods comprising reactions known in the art.

For example, a first intermediate composition [composition (INT¹)] can be manufactured via a method [method (M1)] comprising the following steps:
(i) providing at least one PFPE polymer selected in the group consisting of PFPE polymer (bif) or PFPE polymer (monof) as defined above;
(ii) converting at least part of the -OH groups of said PFPE polymer into epoxy groups, thus obtaining composition (INT1) comprising :
   - a (per)fluoropolyether polymer [polymer P^{bif-INT1}] comprising a chain (R_{pf}) having two chain ends bonded to opposite sides of said chain (R_{pf}), wherein both chain ends comprise an epoxy group,
   - optionally in admixture with a (per)fluoropolyether polymer [polymer P^{monof-INT1}] comprising a chain (R_{pf}) having two chain ends bonded to opposite sides of said chain (R_{pf}), wherein one chain end comprises an epoxy group and the other chain end comprises a perfluoroalkyl group.

Said composition (INT1) constitutes another aspect of the present invention.

The (per)fluoropolyether (PFPE) polymer used as starting material in step (i) is preferably a PFPE polymer (bif) or PFPE polymer (monof) complying with the following formula :

(PFPE-i) T-(R_{pf})-[OCH(J)CH(J*)]ₜ₂-OH

wherein
(R_{pf}) is as defined above,
T is -OH, a perfluoroalkyl group or a group of formula HO-[CH(J*)CH(J)O]ₜ₁-,
t1 and t2, each independently, is 0 or an integer from 1 to 50, and
J and J*, each independently, is as defined above for chain (Ra).

Preferably, step (ii) is performed by contacting said PFPE polymer (bif) or PFPE polymer (monof) with at least one compound comprising an epoxy group [compound (E)].

Preferably, said compound (E) is selected from the group comprising, preferably consisting of: epichlorohydrin, epibromohydrin, epiiodohydrin.

It will be understood by those skilled in the art that under step (ii), preferably about 100% of the -OH groups of the starting PFPE polymer (either mono-functional PFPE or di-functional PFPE) are converted into epoxy groups.

However, partial conversion of the -OH groups can also be obtained. Under this embodiment, in the subsequent steps of the above method, the polymers obtained will comprise a statistical combination of different substituents at their chain ends will be obtained.

Advantageously, a second intermediate composition [composition (INT2)] can be manufactured via a method [method (M2)] comprising:
(iii) contacting the composition (INT1) as defined above obtained in step
(ii) with at least one compound bearing a secondary amine or a tertiary amine bearing one -OH group, so as to convert said -O-epoxy groups into groups of formula :

   -O-Rₓ₁-CH(OH)-Rₓ₂-N(R^{h1})(R^{h2})

   wherein
   Rₓ₁ is a linear or branched alkyl chain comprising from 1 to 6 carbon atoms, a cycloaliphatic ring having 5 or 6 members, or an aromatic ring having 5 or 6 members, said cycloaliphatic or aromatic ring being optionally substituted with at least one heteroatom selected in the group consisting of : nitrogen, oxygen and sulphur;
   R_{X2} is a linear or branched alkyl or alkoxy chain comprising 1 to 30 carbon atoms, optionally substituted with one or more -OH groups and optionally comprising a poly(oxy)alkylene chain, a cycloaliphatic ring having 5 or 6 members, or an aromatic ring having 5 or 6 members, said cycloaliphatic or aromatic ring being optionally substituted with at least one heteroatom selected in the group consisting of : nitrogen, oxygen and sulphur; and Rₕ₁ and Rₕ₂ are as defined above in formula (N⁺-I);
   thus obtaining composition (INT²) comprising:
      - a (per)fluoropolyether polymer [polymer P^{bif-INT2}] comprising a chain (R_{pf}) having two chain ends bonded to opposite sides of said chain (R_{pf}), wherein both chain ends comprise a group of formula :

         -O-Rₓ₁-CH(OH)-Rₓ₂-N(R^{h1})(R^{h2})

         wherein Rₓ₁, Rₓ₂, Rₕ₁ and Rₕ₂ are as defined above,
      - optionally in admixture with a (per)fluoropolyether polymer [polymer P^{monof-INT2}] comprising a chain (R_{pf}) having two chain ends bonded to opposite sides of said chain (R_{pf}), wherein one chain end comprises a perfluoroalkyl group and the other chain end comprises a group of formula:

         -O-Rₓ₁-CH(OH)-Rₓ₂-N(R^{h1})(R^{h2})
wherein Rₓ₁, Rₓ₂, Rₕ₁ and Rₕ₂ are as defined above.

Said composition (INT2) constitutes another aspect of the present invention.

Preferably, under step (iii), said compound bearing a secondary amine complies with the following formula:

HN(R^{h1})(R^{h2})

wherein
each of R^{h1} and R^{h2} is independently selected from linear or branched alkyl chain having from 1 to 20 carbon atoms, preferably from 1 to 6, more preferably from 1 to 4, optionally substituted with one or more -OH groups, benzyl or
R^{h1} and R^{h2} together with the nitrogen atom form an aliphatic ring comprising 4 or 5 carbon atoms and the nitrogen atom.

More preferably, said at least one secondary amine is selected in the group comprising, even more preferably consisting of: dimethylamine, diethylamine, dipropylamine, diisopropylamine, dibutylamine, diisobutylamine, ditertbutylamine, dihexylamine, dioctylamine, didecylamine, didodecylamine.

Dimethylamine, diethylamine, dipropylamine, dibutylamine are more preferred.

Preferably, said compound bearing a tertiary amine bearing at least one -OH group complies with the following formula :

HO-(R_{X3})-N(R^{h3})(R^{h4})

wherein
R_{X3} is a linear or branched alkyl or alkoxy chain comprising 1 to 30 carbon atoms, optionally substituted with one or more -OH groups and optionally comprising a poly(oxy)alkylene chain, a cycloaliphatic ring having 5 or 6 members, or an aromatic ring having 5 or 6 members, said cycloaliphatic or aromatic ring being optionally substituted with at least one heteroatom selected from : nitrogen, oxygen or sulphur;
each of R^{h3} and R^{h4} is independently selected from linear or branched alkyl chain having from 1 to 20 carbon atoms, preferably from 1 to 4, optionally substituted with one or more -OH groups, benzyl or
R^{h3} and R^{h4} together with the nitrogen atom form an aliphatic ring comprising 4 or 5 carbon atoms and the nitrogen atom or R^{h3} and R^{h4} together with R_{X3} form an aromatic ring comprising 4 or 5 carbon atoms and the nitrogen atom.

Preferably, the compound bearing a tertiary amine bearing one -OH group is selected from 2-(diethylamino)ethanol, 3-dimethylamino-1-propanol.

Further, the polymers (P^{P-bif}) and (P^{P-monof}) according to the present invention can be manufactured via a method [method (M3)] comprising the steps of :
(iv) contacting composition (INT2) as defined above obtained in step (iii) with a compound selected from : alkyl halides, benzyl halides, alkyl sulfonate and alkyl aryl sulfonate,
so as to convert groups of formula -O-Rₓ₁-CH(OH)-Rₓ₂-N(R^{h1})(R^{h2}) into -O-Rₓ₁-CH(OH)-Rₓ₂-N⁺(R^{h1})(R^{h2})(R^{h3})
wherein Rₓ₁, Rₓ₂, Rₕ₁ and Rₕ₂ are as defined above and
R^{h3} is linear or branched alkyl or alkoxy chain comprising 1 to 30 carbon atoms, optionally substituted with one or more -OH groups and optionally comprising a poly(oxy)alkylene chain, a cycloaliphatic ring having 5 or 6 members, or benzyl group;
(v) contacting the mixture obtained in step (iv) with compound selected in the group consisting of :
   - a compound [A] bearing at least one group (U) as defined above, and at least one halogen atom or at least one isocyanate group; or
   - a compound [B] bearing at least one group (E) as defined above, and at least one halogen atom or at least one isocyanate group; or
   - a compound [C] bearing at least one group (Si) as defined above, and at least one halogen atom or at least one isocyanate group,
thus obtaining polymer (P^{P-bif}) or polymer (P^{P-monof}).

Preferably, under step (iv), the reaction with alkyl halide is preferred; more preferably said alkyl halide is selected from: iodooctane and bromooctane.

Preferably, under step (v), the reaction with compound [A] is preferred.

Preferably, under step (v), said compound [A] complies with the following formula:

O=C=N-R²⁰-R²¹-CR_{H}=CH₂

wherein
R_{H} has the same meanings defined above for group (U);
R²⁰ is a linear or branched alkyl chain having from 1 to 6 carbon atoms,
optionally substituted with a group comprising a tri-alkoxy-silyl group; and
R²¹ is a divalent group of formula -O-C(=O)-, -O-C(=O)-NH-CO-, -O-C(=O)-R^{A}- wherein R^{A} is as defined above for group (U-III).

More preferably, said compound [A] is selected in the group comprising, even more preferably consisting of: isocyanatoethylmethacrylate (IEM), allyl isocyanate, 3-isopropenyl-α,α-dimethylbenzyl isocyanate, vinyl isocyanate, acryloyl isocyanate, methacryloyl isocyanate, 2-isocyanatoethyl acrylate, 1,1-(bisacryloyloxymethyl) ethyl isocyanate, 2-(2-metacryloyloxyethyloxy) ethyl isocyanate.

It will be understood by those skilled in the art that the above steps from (i) to (iii) as well as steps from (i) to (v) can also be performed continuously, without separating each of the intermediate compositions (INT1) and (INT2).

Thus, another object of the present invention relates to a method for the manufacture of polymers (P^{P-bif}) and (P^{P-monof}) as defined above, said method comprising performing steps from (i) to (v) as defined above in a one-pot synthesis.

As disclosed above, said polymer (P^{P}) or said composition (C^{P}) can be used as such or it can be used as additive in a suitable solvent.

Preferably, composition (DIL) comprises from 0.01 to 50 wt.% of any of polymer (P^{P}) or composition (C^{P}) and from 50 to 99.99 wt.% of at least one solvent (S) as defined above.

Advantageously, said solvent (S) is selected from (per)fluoropolyether polymers having at the chain ends thereof at least one, more preferably at least two, unsaturated group(s).

According to another embodiment, the present invention relates to a method for imparting antimicrobial properties to an article, said method comprising :
(a) providing polymer (P^{P}) or composition (C^{P}) or composition (DIL) as defined above;
(b) proving an article having at least one surface;
(c) contacting said polymer (P^{P}) or said composition (C^{P}) or said composition (DIL) and at least one part of said at least one surface;
(d) coating said at least one part of said at least one surface with said polymer (P^{P}) or composition (C^{P}) or composition (DIL).

Advantageously, said article is selected from articles made of plastic, metal, glass, paper or textiles, such as notably cotton paper. More preferably, said article is a banknote.

Preferably, when at least one group (U) is present in any of polymer (P^{P}), composition (C^{P}) or composition (DIL), step (d) is performed by curing said composition (C^{P}) or composition (DIL) more preferably with UV rays.

The invention will be herein after illustrated in greater detail by means of the Examples contained in the following Experimental Section; the Examples are merely illustrative and are by no means to be interpreted as limiting the scope of the invention.

### Experimental Section

### Materials and methods

Fomblin^{®} Z DOL and Fluorolink^{®} MD700 were obtained from Solvay Specialty Polymers Italy S.p.A.

The following were obtained by Aldrich: bis(trifluoromethyl)benzene, diethylamine, potassium hydroxide (≥85%), tetra-n-butylammonium bromide, epibromohydrin, acetonitrile, methanol, 1-iodooctane, 2,6-di-tert-butyl-4-methylphenol (BHT) and 2-isocyanatoethyl methacrylate.

SnapCureTM 1030 was obtained from Alfa Aesar Gmbh &Co..

¹H-NMR and ¹⁹F-NMR were recorded on a Agilent System 500 operating at 499.86 MHz for 1H and 470.30 MHz for 19F.

FT-IR spectra were measured with a ThermoScientific FTIR spectrophotometer on liquid samples as thin films on KBr. Spectra were acquired by co-adding 256 scans with a resolution of 2 cm⁻¹.

### Example 1 - Synthesis of Polymer 1

**Step 1:** A 4-necked round bottom flask with 1.0 L capacity, kept under nitrogen atmosphere and equipped with a condenser, a mechanical stirrer, a thermometer probe and a dropping funnel, was charged with 200 g (EW= g/mol 795 ; 251.6 meq ) of Fomblin^{®} Z-DOL, 697 g of 1,3-bis(trifluoromethyl)benzene, 2 g of tetra-n-butylammonium bromide (6.2 meq) and 20 g of potassium hydroxide (355.2 meq). The flask was kept under stirring for 1h at room temperature. Next, 86 g of epibromohydrin (628,9 meq) were added to the flask and the reaction mixture was heated to 70°C for 3h. After this time, the reaction was cooled down and the mixture filtered. Distillation under reduced pressure (T=70.0°C, P=2 Pa) yielded 180.0 g of a clear pale yellow liquid.

¹H-NMR analysis confirmed that the obtained product was the starting Z-DOL with 90% of the hydroxyl end groups quantitatively converted into the 2,3-epoxy propane derivatives.

**Step 2:** A 4-necked round bottom flask of 0.5 L capacity, kept under nitrogen atmosphere and equipped with a condenser, a mechanical stirrer, a thermometer probe and a dropping funnel, was charged with 150 g of the product obtained in Step 1, 16 g of diethylamine (216.8 meq) and 75 g of 1,3- bis(trifluoromethyl)benzene. The resulting mixture was heated up to 70° and let under vigorous stirring for 8 hours. After this time, the reaction mixture was cooled to room temperature and washed with 80g of distilled water. After phase separation, the bottom organic phase was recovered and distilled under reduced pressure (T= 70°C, P= 2Pa) to remove the solvents obtaining 153 g of a yellow product.

¹H NMR analysis confirmed the quantitative opening of the epoxide ring to yield the amino-alcohol derivative.

**Step 3:** A 4-necked round bottom flask of 0.5 L capacity, kept under nitrogen atmosphere and equipped with a condenser, a mechanical stirrer, a thermometer probe and a dropping funnel, was charged with 100 g of the product obtained in Step 2, 26 g of 1-iodo octane (108.6 meq), 50 g of 1,3-bis(trifluoromethyl)benzene and 50 g of acetonitrile. The resulting mixture was heated up to 80°C and left under vigorous stirring for 40 hours. After this time, the solvents were distilled under reduced pressure (T= 70°C, P= 2Pa) to remove the solvents, obtaining 123 g of a yellow viscous product.

¹H NMR analysis confirmed the quantitative reaction of the alkyl halide with the tertiary amine to yield the target quaternary ammonium salt. **Step 4:** A 4-necked round bottom flask of 0.25 L capacity, equipped with a condenser, a mechanical stirrer a dropping funnel and a thermometer probe, was charged with 100 g of the product obtained in Step 3, 3,9*10⁻² g of 2,6-di-tert-butyl-4-methylphenol (BHT), 6.1*10⁻² g of SnapCure^{™} 1030 and the obtained mixture was heated up to 50°C. 11.7 g of 2-isocyanato ethyl methacrylate (76.1 meq) were then slowly added to the flask. The temperature was raised to 60 °C and the reaction mixture was let under vigorous stirring for 3 hours. Thereafter, 1.1 g of methanol were added, the reaction mixture was stirred for further 2 hours and dried under reduced pressure (T= 60°C, P = 2Pa) obtaining 111.9 g of Polymer 1.

## Claims

1. A (per)fluoropolyether polymer [(polymer (P^{P} comprising a (per)fluoropolyether chain [chain (R_{pf})] having two chain ends [chains (Re)] bonded to opposite sides of said chain (R_{pf}), wherein:
- a first chain end comprises at least one group comprising a quaternary ammonium salt group [group (N⁺)] and at least one group selected in the group consisting of : alkoxysilane [group (Si)] and cross-linkable group, preferably selected from unsaturated moiety [group (U)] and epoxy [group (E)]; and
- the second chain end comprises either a perfluoroalkyl group or a quaternary ammonium salt group [group (N⁺)] and at least one group selected in the group consisting of : alkoxysilane [group (Si)] and cross-linkable group, preferably selected from unsaturated moiety [group (U)] and epoxy [group (E)].

2. The polymer (P^{P} according to Claim 1, wherein said polymer (P^{P} is:
- a bifunctional (per)fluoropolyether polymer [polymer (P^{P-bif})] comprising a (per)fluoropolyether chain [chain (R_{pf})] having two chain ends [chains (Re)] bonded to opposite sides of said chain (R_{pf}), wherein both chain ends comprise at least one group comprising a quaternary ammonium salt group [group (N⁺)] and at least one group selected in the group consisting of : alkoxysilane [group (Si)] and cross-linkable group, preferably selected from unsaturated moiety [group (U)] and epoxy [group (E)]; or
- a monofunctional (per)fluoropolyether polymer [polymer (P^{P-monof})]comprising a (per)fluoropolyether chain [chain (R_{pf})] having two chain ends [chains (Re)] bonded to opposite sides of said chain (R_{pf}), wherein one chain end bears one perfluoroalkyl group and the other chain end comprises at least one quaternary ammonium salt group [group (N⁺)] and at least one group selected in the group consisting of: alkoxysilane [group (Si)] and cross-linkable group, preferably selected from unsaturated moiety [group (U)] and epoxy [group (E)].

3. The polymer (P^{P} according to Claim 1 or 2, wherein said chain (R_{pf} is a chain of formula
-D-(CFX^{#})_{z1}-O(R_{f})(CFX^{*})_{z2}-D^{*}-
wherein
z1 and z2, equal or different from each other, are equal to or higher than 1;
X^{#} and X*, equal or different from each other, are -F or -CF₃,
provided that when z1 and/or z2 are higher than 1, X^{#} and X* are -F;
D and D*, equal or different from each other, are a sigma bond, an alkylene chain comprising from 1 to 6 carbon atoms, said alkyl chain being optionally substituted with at least one perfluoroalkyl group comprising from 1 to 3 carbon atoms;
(R_{f}) comprises, preferably consists of, repeating units R°, said repeating units being independently selected from the group consisting of:
(i) -CFXO-, wherein X is F or CF₃;
(ii) -CFXCFXO-, wherein X, equal or different at each occurrence, is F or CF₃, with the proviso that at least one of X is -F;
(iii) -CF₂CF₂CW₂O-, wherein each of W, equal or different from each other, are F, Cl, H;
(iv) -CF₂CF₂CF₂CF₂O-;
(v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently For CF₃ and T being a C₁-C₃ perfluoroalkyl group.

4. The polymer (P^{P} according to Claim 1 or 2, wherein said group (N⁺ is selected in the group comprising :
(N⁺-I) -N⁺(R^{h1})(R^{h2})(R^{h3})
wherein
each of R^{h1}, R^{h2}, and R^{h3} is independently selected from linear or branched alkyl chain having from 1 to 20 carbon atoms, said alkyl chain being optionally substituted with one or more -OH groups; benzyl or at least two of R^{h1}, R^{h2}, and
R^{h3} together with the nitrogen atom form an aliphatic ring comprising 4 or 5 carbon atoms and the nitrogen atom.

5. The polymer (P^{P} according to Claim 1 or 2, wherein said group (U) is selected in the group consisting of:
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
wherein
R_{H} is H or a C₁-C₆ alkyl group;
R^{A} is selected from the group consisting of (R^{A}-I) and (R^{A}-II): 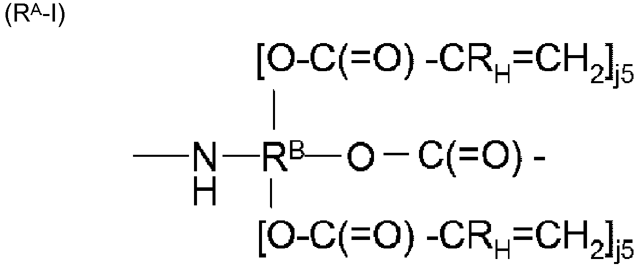 wherein
each of j5 is independently 0 or 1 and
R^{B} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; 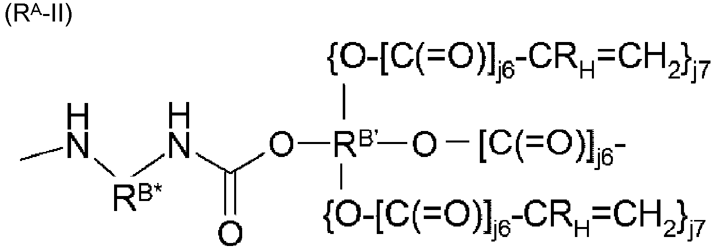 wherein
j6 is 0 or 1;
each of j7 is independently 0 or 1;
R^{B'} is a divalent, trivalent or tetravalent group selected from the group consisting of C₁-C₁₀ aliphatic group; C₃-C₁₂ cycloaliphatic group; C₅-C₁₄ aromatic or alkylaromatic group, optionally comprising at least one heteroatom selected from N, O and S; and
R^{B*} has the same meanings defined above for R^{B'} or it is a group of formula (R^{B}-I): 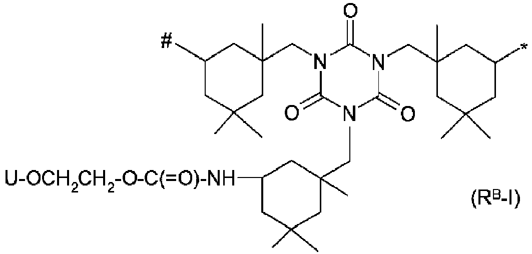 wherein
substituent U is selected from the groups (U-I) to (U-III) as defined above and
* and # indicate the bonding site to the nitrogen atoms in formula (R^{A}-II) above.

6. The polymer (P^{P} according to Claim 1 or 2, wherein :
- when said chain end(s) comprise(s) said group (N⁺), said chain(s) (Re) is(are) bonded to said chain (R_{pf}) via a sigma bond or via a poly(oxy)alkylene chain [chain (Rₐ)];
- when said chain(s) (Re) comprise(s) said group (U), said chain(s) (Re) is(are) bonded to said chain (R_{pf}) via group of formula :
* -R¹⁰-NH-C(=O)-O-R¹¹- #
wherein
* indicate the bond to group (U)
# indicate the bond to chain (R_{pf})
R¹⁰ is a linear or branched alkyl chain having from 1 to 6 carbon atoms,
optionally substituted with a group comprising a tri-alkoxy-silyl group;
R¹¹ is a sigma bond or a poly(oxy)alkylene chain [chain (Rₐ^)], wherein said chain (Rₐ^) comprises from 1 to 50 fluorine-free oxyalkylene units, said units being the same or different each other and being selected from -CH(J*)CH(J)-O, wherein each of J and J* is independently selected from hydrogen atom, straight or branched alkyl or aryl.

7. A composition [composition (C^{P} comprising :
- a (per)fluoropolyether polymer [polymer (P^{P-bif})] as defined in any one of Claims 2 to 6; and
- a (per)fluoropolyether polymer [polymer (P^{P-monof})]as defined in any one of Claims 2 to 6.

8. A method [method (M1)] for the manufacture of a first composition [composition (INT1), said method (M1) comprising the following steps:
(i) providing at least one (per)fluoropolyether (PFPE) polymer comprising : a (per)fluoropolyether chain [chain (R_{pf})] having two chain ends bonded to opposite sides of said chain (R_{pf}), wherein both chain ends comprises at least one -OH group [PFPE polymer (bif)] or a (per)fluoropolyether (PFPE) polymer comprising a (per)fluoropolyether chain [chain (R_{pf})] having two chain ends bonded to opposite sides of said chain (R_{pf}), wherein one of said chain ends comprises at least one -OH group and the other chain end comprises a perfluoroalkyl group [PFPE polymer (monof)];
(ii) converting at least part of the -OH groups of said PFPE polymer (bif) or said PFPE polymer (monof) into epoxy groups, thus obtaining composition (INT1) comprising :
- a (per)fluoropolyether polymer [polymer P^{bif-INT1}] comprising a chain (R_{pf}) having two chain ends bonded to opposite sides of said chain (R_{pf}), wherein both chain ends comprise an epoxy group,
- optionally in admixture with a (per)fluoropolyether polymer [polymer P^{monof-INT1}] comprising a chain (R_{pf}) having two chain ends bonded to opposite sides of said chain (R_{pf}), wherein one chain end comprises an epoxy group and the other chain end comprises a perfluoroalkyl group.

9. A composition (INT1) comprising :
- a (per)fluoropolyether polymer [polymer P^{bif-INT1}] comprising a chain (R_{pf}) having two chain ends bonded to opposite sides of said chain (R_{pf}), wherein both chain ends comprise an epoxy group,
- optionally in admixture with a (per)fluoropolyether polymer [polymer P^{monof-INT1}] comprising a chain (R_{pf}) having two chain ends bonded to opposite sides of said chain (R_{pf}), wherein one chain end comprises an epoxy group and the other chain end comprises a perfluoroalkyl group.

10. A method [method (M2) for the manufacture of a composition [composition (INT2)], said method (M2) comprising the following steps:
(iii) contacting composition (INT1) as defined in Claim 9, with at least one compound bearing a secondary amine or a tertiary amine bearing one -OH group, so as to convert said -O-epoxy groups into groups of formula :
-O-Rₓ₁-CH(OH)-Rₓ₂-N(R^{h1})(R^{h2})
wherein
Rₓ₁ is a linear or branched alkyl chain comprising from 1 to 6 carbon atoms, a cycloaliphatic ring having 5 or 6 members, or an aromatic ring having 5 or 6 members, said cycloaliphatic or aromatic ring being optionally substituted with at least one heteroatom selected in the group consisting of : nitrogen, oxygen and sulphur;
R_{X2} is a linear or branched alkyl or alkoxy chain comprising 1 to 30 carbon atoms, optionally substituted with one or more -OH groups and optionally comprising a poly(oxy)alkylene chain, a cycloaliphatic ring having 5 or 6 members, or an aromatic ring having 5 or 6 members, said cycloaliphatic or aromatic ring being optionally substituted with at least one heteroatom selected in the group consisting of : nitrogen, oxygen and sulphur; and
Rₕ₁ and Rₕ₂ are as defined in Claim 4,
thus obtaining composition (INT²) comprising:
- a (per)fluoropolyether polymer [polymer P^{bif-INT2}] comprising a chain (R_{pf}) having two chain ends bonded to opposite sides of said chain (R_{pf}), wherein both chain ends comprise a group of formula :
-O-Rₓ₁-CH(OH)-Rₓ₂-N(R^{h1})(R^{h2})
wherein Rₓ₁, Rₓ₂, Rₕ₁ and Rₕ₂ are as defined above,
- optionally in admixture with a (per)fluoropolyether polymer [polymer P^{monof-INT2}] comprising a chain (R_{pf}) having two chain ends bonded to opposite sides of said chain (R_{pf}), wherein one chain end comprises a perfluoroalkyl group and the other chain end comprises a group of formula:
-O-Rₓ₁-CH(OH)-Rₓ₂-N(R^{h1})(R^{h2})
wherein Rₓ₁, Rₓ₂, Rₕ₁ and Rₕ₂ are as defined above.

11. A composition (INT² comprising:
- a (per)fluoropolyether polymer [polymer P^{bif-INT2}] comprising a chain (R_{pf}) having two chain ends bonded to opposite sides of said chain (R_{pf}), wherein both chain ends comprise a group of formula :
-O-Rₓ₁-CH(OH)-Rₓ₂-N(R^{h1})(R^{h2})
wherein Rₓ₁, Rₓ₂, Rₕ₁ and Rₕ₂ are as defined above,
- optionally in admixture with a (per)fluoropolyether polymer [polymer P^{monof-INT2}] comprising a chain (R_{pf}) having two chain ends bonded to opposite sides of said chain (R_{pf}), wherein one chain end comprises a perfluoroalkyl group and the other chain end comprises a group of formula:
-O-Rₓ₁-CH(OH)-Rₓ₂-N(R^{h1})(R^{h2})
wherein Rₓ₁, Rₓ₂, Rₕ₁ and Rₕ₂ are as defined above.

12. A method [method (M3)] for the manufacture of polymers (P^{P-bif} and (P^{P-monof}) as defined in any one of Claims 2 to 6, said method (M3) comprising the steps of:
(iv) contacting composition (INT2) as defined in Claim 11 with a compound selected from : alkyl halides, benzyl halides, alkyl sulfonate and alkyl aryl sulfonate,
so as to convert groups of formula -O-Rₓ₁-CH(OH)-Rₓ₂-N(R^{h1})(R^{h2}) into
-O-Rₓ₁-CH(OH)-Rₓ₂-N⁺(R^{h1})(R^{h2})(R^{h3})
wherein Rₓ₁, Rₓ₂ are as defined above
Rₕ₁ and Rₕ₂ are as defined in Claim 5, and
R^{h3} is linear or branched alkyl or alkoxy chain comprising 1 to 30 carbon atoms,
optionally substituted with one or more -OH groups and optionally comprising a poly(oxy)alkylene chain, a cycloaliphatic ring having 5 or 6 members, or benzyl group;
(v) contacting the mixture obtained in step (iv) with compound selected in the group consisting of :
- a compound [A] bearing at least one group (U) as defined above, and at least one halogen atom or at least one isocyanate group; or
- a compound [B] bearing at least one group (E) as defined above, and at least one halogen atom or at least one isocyanate group; or
- a compound [C] bearing at least one group (Si) as defined above, and at least one halogen atom or at least one isocyanate group,
thus obtaining polymer (P^{P-bif}) or polymer (P^{P-monof}).

13. A composition [composition (DIL)] comprising composition (C^{P} as defined in Claim 7 and at least one solvent [solvent (S)] selected in the group comprising : (per)fluorinated fluids, optionally comprising at least one unsaturated moiety; hydrogenated fluids, optionally comprising at least one unsaturated moiety.

14. A method for imparting antimicrobial properties to an article, said method comprising :
(a) providing polymer (P^{P}) as defined in any one of Claims 1 to 6 or composition (C^{P}) as defined in Claim 7 or composition (DIL) as defined in Claim 13;
(b) proving an article having at least one surface;
(c) contacting said composition (C^{P}) or composition (DIL) and at least one part of said at least one surface;
(d) coating said at least one part of said at least one surface with said composition (C^{P}) or composition (DIL).

15. The method according to Claim 14, wherein said article is selected from articles made of plastic, metal, glass, paper or textile.

## Patentansprüche

1. (Per)fluorpolyether-Polymer [Polymer (P^{P})], umfassend eine(Per)fluorpolyetherkette [Kette (R_{pf})] mit zwei Kettenenden [Ketten (Re)], die an entgegengesetzte Seiten der Kette (R_{pf}) gebunden sind, wobei:
- ein erstes Kettenende mindestens eine Gruppe, die eine quartäre Ammoniumsalzgruppe [Gruppe (N⁺)] umfasst, und mindestens eine Gruppe, die aus der Gruppe bestehend aus einer Alkoxysilangruppe [Gruppe (Si)] und einer vernetzbaren Gruppe, die vorzugsweise aus einer ungesättigten Gruppierung [Gruppe (U)] und Epoxy [Gruppe (E) ausgewählt ist, ausgewählt ist, umfasst; und
- das zweite Kettenende entweder eine Perfluoralkylgruppe oder eine quartäre Ammoniumsalzgruppe [Gruppe (N⁺)] und mindestens eine Gruppe, die aus der Gruppe bestehend aus einer Alkoxysilangruppe [Gruppe (Si)] und einer vernetzbaren Gruppe, die vorzugsweise aus einer ungesättigten Gruppierung [Gruppe (U)] und Epoxy [Gruppe (E)] ausgewählt ist, ausgewählt ist, umfasst.

2. Polymer (P^{P}) nach Anspruch 1, wobei es sich bei dem Polymer (P^{P}) um Folgendes handelt:
- ein bifunktionelles(Per)fluorpolyether-Polymer [Polymer (P^{P-bif})], umfassend eine (Per) fluorpolyetherkette [Kette (R_{pf})] mit zwei Kettenenden [Ketten (Re)], die an entgegengesetzte Seiten der Kette (R_{pf}) gebunden sind, wobei beide Kettenenden mindestens eine Gruppe, die eine quartäre Ammoniumsalzgruppe [Gruppe (N⁺)] umfasst, und mindestens eine Gruppe, die aus der Gruppe bestehend aus einer Alkoxysilangruppe [Gruppe (Si)] und einer vernetzbaren Gruppe, die vorzugsweise aus einer ungesättigten Gruppierung [Gruppe (U)] und Epoxy [Gruppe (E)] ausgewählt ist, ausgewählt ist, umfassen; oder
- ein monofunktionelles(Per)fluorpolyether-Polymer [Polymer (P^{P-monof})], umfassend eine (Per) fluorpolyetherkette [Kette (R_{pf})] mit zwei Kettenenden [Ketten (Re)], die an entgegengesetzte Seiten der Kette (R_{pf}) gebunden sind, wobei ein Kettenende eine Perfluoralkylgruppe trägt und das andere Kettenende mindestens eine quartäre Ammoniumsalzgruppe [Gruppe (N⁺)] und mindestens eine Gruppe, die aus der Gruppe bestehend aus einer Alkoxysilangruppe [Gruppe (Si)] und einer vernetzbaren Gruppe, die vorzugsweise aus einer ungesättigten Gruppierung [Gruppe (U)] und Epoxy [Gruppe (E)] ausgewählt ist, ausgewählt ist, umfasst.

3. Polymer (P^{P}) nach Anspruch 1 oder 2, wobei die Kette (R_{pf}) eine Kette der Formel
-D-(CFX^{#})_{z1}-O(R_{f})(CFX*)_{z2}-D*-
ist, wobei
z1 und z2 gleich oder voneinander verschieden sind und gleich oder größer als 1 sind;
X^{#} und X* gleich oder voneinander verschieden sind und für -F oder -CF₃ stehen,
mit der Maßgabe, dass dann, wenn z1 und/oder z2 größer als 1 sind, X^{#} und X* für -F stehen;
D und D* gleich oder voneinander verschieden sind und für eine Sigma-Bindung oder eine Alkylenkette mit 1 bis 6 Kohlenstoffatomen stehen, wobei die Alkylkette gegebenenfalls durch mindestens eine Perfluoralkylgruppe mit 1 bis 3 Kohlenstoffatomen substituiert ist;
(R_{f}) Wiederholungseinheiten R^{o} umfasst und vorzugsweise daraus besteht, wobei die Wiederholungseinheiten unabhängig aus der Gruppe bestehend aus:
(i) -CFXO-, wobei X für F oder CF₃ steht;
(ii) -CFXCFXO-, wobei X bei jedem Auftreten gleich oder verschieden ist und für F oder CF₃ steht, mit der Maßgabe, dass mindestens eines von X für -F steht;
(iii) -CF₂CF₂CW₂O-, wobei W jeweils gleich oder verschieden ist und für F, Cl oder H steht;
(iv) -CF₂CF₂CF₂CF₂O-;
(v) -(CF₂)ⱼ-CFZ-O-, wobei j für eine ganze Zahl von 0 bis 3 steht und Z für eine Gruppe der allgemeinen Formel -O-R_{(f-a)}-T steht, wobei R_{(f-a)} für eine Fluorpolyoxyalkylenkette mit einer Zahl von Wiederholungseinheiten von 0 bis 10 steht, wobei die Wiederholungseinheiten aus den Folgenden ausgewählt sind: -CFXO-, -CF₂CFXO-, -CF₂CF₂CF₂O-, -CF₂CF₂CF₂CF₂O-, wobei X jeweils unabhängig für F oder CF₃ steht und T für eine C₁-C₃-Perfluoralkylgruppe steht, ausgewählt sind.

4. Polymer (P^{P}) nach Anspruch 1 oder 2, wobei die Gruppe (N⁺) aus der Gruppe umfassend
(N⁺-I) -N⁺(R^{h1})(R^{h2})(R^{h3})
ausgewählt ist, wobei
R^{h1}, R^{h2} und R^{h3} jeweils unabhängig aus einer linearen oder verzweigten Alkylkette mit 1 bis 20 Kohlenstoffatomen, wobei die Alkylkette gegebenenfalls durch ein oder mehrere -OH-Gruppen substituiert ist; und Benzyl ausgewählt sind oder mindestens zwei von R^{h1}, R^{h2} und R^{h3} zusammen mit dem Stickstoffatom einen aliphatischen Ring, der 4 oder 5 Kohlenstoffatomen und das Stickstoffatom umfasst, bilden.

5. Polymer (P^{P}) nach Anspruch 1 oder 2, wobei die Gruppe (U) aus der Gruppe bestehend aus
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
ausgewählt ist, wobei
R_{H} für H oder eine C₁-C₆-Alkylgruppe steht;
R^{A} aus der Gruppe bestehend aus (R^{A}-I) und (R^{A}-II) ausgewählt ist: 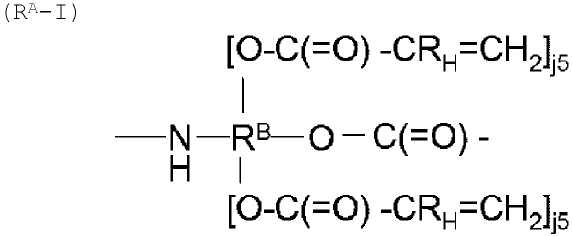 wobei
j5 jeweils unabhängig für 0 oder 1 steht und
R^{B} für eine zweiwertige, dreiwertige oder vierwertige Gruppe steht, die aus der Gruppe bestehend aus einer aliphatischen C₁-C₁₀-Gruppe; einer cycloaliphatischen C₃-C₁₂-Gruppe; einer aromatischen oder alkylaromatischen C₅-C₁₄-Gruppe, die gegebenenfalls mindestens ein aus N, O und S ausgewähltes Heteroatom umfasst; ausgewählt ist; 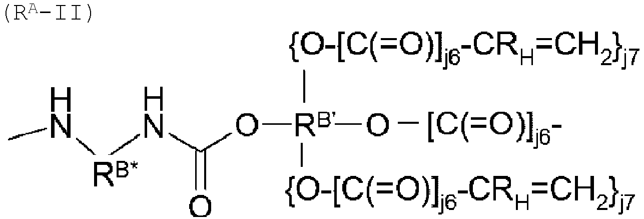 wobei
j6 für 0 oder 1 steht;
j7 jeweils unabhängig für 0 oder 1 steht;
R^{B'} für eine zweiwertige, dreiwertige oder vierwertige Gruppe steht, die aus der Gruppe bestehend aus einer aliphatischen C₁-C₁₀-Gruppe; einer cycloaliphatischen C₃-C₁₂-Gruppe; einer aromatischen oder alkylaromatischen C₅-C₁₄-Gruppe, die gegebenenfalls mindestens ein aus N, O und S ausgewähltes Heteroatom umfasst; ausgewählt ist; und
R^{B}* die gleichen Bedeutungen wie oben für R^{B'} definiert aufweist oder für eine Gruppe der Formel (R^{B}-I): 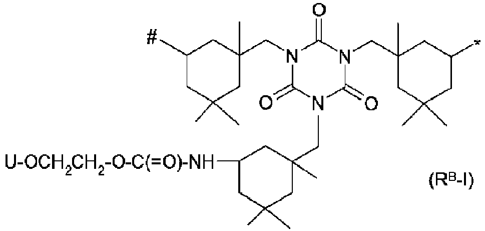 steht, wobei
der Substituent U aus den Gruppen (U-I) bis (U-III) gemäß obiger Definition ausgewählt ist und
* und # die Bindungsstelle an die Stickstoffatome in obiger Formel (R^{A}-II) anzeigen.

6. Polymer (P^{P}) nach Anspruch 1 oder 2, wobei:
- dann, wenn das Kettenende bzw. die Kettenenden die Gruppe (N⁺) umfasst bzw. umfassen, die Kette bzw. die Ketten (Re) über eine Sigma-Bindung oder über eine Poly(oxy)alkylenkette [Kette (Rₐ)] an die Kette (R_{pf}) gebunden ist bzw. sind;
- dann, wenn das Kettenende bzw. die Kettenenden die Gruppe (U) umfasst bzw. umfassen, die Kette bzw. die Ketten (Re) über eine Gruppe der Formel:
*-R¹⁰-NH-C(=O)-O-R¹¹-#
an die Kette (R_{pf}) gebunden ist bzw. sind, wobei
* die Bindung an die Gruppe (U) anzeigt,
# die Bindung an die Kette (R_{pf}) anzeigt,
R¹⁰ für eine lineare oder verzweigte Alkylkette mit 1 bis 6 Kohlenstoffatomen, die gegebenenfalls durch eine Gruppe, die eine Trialkoxysilylgruppe umfasst, substituiert ist, steht;
R¹¹ für eine Sigma-Bindung oder eine Poly(oxy)alkylenkette [Kette (Rₐ^{Λ})] steht, wobei die Kette (Rₐ^{Λ}) 1 bis 50 fluorfreie Oxyalkyleneinheiten umfasst, wobei die Einheiten gleich oder voneinander verschieden sind und aus -CH(J*)CH(J)-O ausgewählt sind, wobei J und J* jeweils unabhängig aus einem Wasserstoffatom, einem geraden oder verzweigten Alkyl oder einem Aryl ausgewählt sind.

7. Zusammensetzung [Zusammensetzung (C^{P})], umfassend:
- ein (Per) fluorpolyether-Polymer [Polymer (P^{P-bif})] gemäß einem der Ansprüche 2 bis 6; und
- ein (Per) fluorpolyether-Polymer [Polymer (P^{P-monof})] gemäß einem der Ansprüche 2 bis 6.

8. Verfahren [Verfahren (M1)] zur Herstellung einer ersten Zusammensetzung [Zusammensetzung (INT1)], wobei das Verfahren (M1) die folgenden Schritte umfasst:
(i) Bereitstellen mindestens eines (Per)fluorpolyether(PFPE)-Polymers, umfassend: eine (Per)fluorpolyetherkette [Kette (R_{pf}) mit zwei Kettenenden, die an entgegengesetzte Seiten der Kette (R_{pf}) gebunden sind, wobei beide Kettenenden mindestens eine -OH-Gruppe umfassen [PFPE-Polymer (bif)] oder eines (Per)fluorpolyether(PFPE)-Polymers, umfassend eine (Per)fluorpolyetherkette [Kette (R_{pf})] mit zwei Kettenenden, die an entgegengesetzte Seiten der Kette (R_{pf}) gebunden sind, wobei eines der Kettenenden mindestens eine - OH-Gruppe umfasst und das andere Kettenende eine Perfluoralkylkette umfasst [PFPE-Polymer (monof)];
(ii) Umwandeln mindestens eines Teils der -OH-Gruppen des PFPE-Polymers (bif) oder des PFPE-Polymers (monof) in Epoxidgruppen, wodurch die Zusammensetzung (INT1) erhalten wird, die Folgendes umfasst:
- ein (Per) fluorpolyether-Polymer [Polymer P^{bif-INT1}], umfassend eine Kette (R_{pf}) mit zwei Kettenenden, die an entgegengesetzte Seiten der Kette (R_{pf}) gebunden sind, wobei beide Kettenenden eine Epoxidgruppe umfassen,
- gegebenenfalls im Gemisch mit einem (Per) fluorpolyether-Polymer [Polymer P^{monof-INT1}], umfassend eine Kette (R_{pf}) mit zwei Kettenenden, die an entgegengesetzte Seiten der Kette (R_{pf}) gebunden sind, wobei ein Kettenende eine Epoxidgruppe umfasst und das andere Kettenende eine Perfluoralkylgruppe umfasst.

9. Zusammensetzung (INT1), umfassend:
- ein (Per) fluorpolyether-Polymer [Polymer P^{bif-INT1}], umfassend eine Kette (R_{pf}) mit zwei Kettenenden, die an entgegengesetzte Seiten der Kette (R_{pf}) gebunden sind, wobei beide Kettenenden eine Epoxidgruppe umfassen,
- gegebenenfalls im Gemisch mit einem (Per) fluorpolyether-Polymer [Polymer P^{monof-INT1}], umfassend eine Kette (R_{pf}) mit zwei Kettenenden, die an entgegengesetzte Seiten der Kette (R_{pf}) gebunden sind, wobei ein Kettenende eine Epoxidgruppe umfasst und das andere Kettenende eine Perfluoralkylgruppe umfasst.

10. Verfahren [Verfahren (M2)] zur Herstellung einer Zusammensetzung [Zusammensetzung (INT2)], wobei das Verfahren (M2) die folgenden Schritte umfasst:
(iii) Inkontaktbringen der Zusammensetzung (INT1) gemäß Anspruch 9 mit mindestens einer Verbindung, die ein sekundäres Amin oder ein tertiäres Amin trägt, das eine -OH-Gruppe trägt, zur Umwandlung der -O-Epoxidgruppen in Gruppen der Formel:
-O-Rₓ₁-CH(OH)-Rₓ₂-N(R^{h1})(R^{h2}),
wobei
Rₓ₁ für eine lineare oder verzweigte Alkylkette mit 1 bis 6 Kohlenstoffatomen, einen cycloaliphatischen Ring mit 5 oder 6 Gliedern oder einen aromatischen Ring mit 5 oder 6 Gliedern steht, wobei der cycloaliphatische oder aromatische Ring gegebenenfalls durch mindestens ein Heteroatom, das aus der Gruppe bestehend aus Stickstoff, Sauerstoff und Schwefel ausgewählt ist, substituiert ist;
Rₓ₂ für eine lineare oder verzweigte Alkyl- oder Alkoxykette mit 1 bis 30 Kohlenstoffatomen, die gegebenenfalls durch eine oder mehrere -OH-Gruppen substituiert ist und gegebenenfalls eine Poly(oxy)alkylenkette umfasst, einen cycloaliphatischen Ring mit 5 oder 6 Gliedern oder einen aromatischen Ring mit 5 oder 6 Gliedern steht, wobei der cycloaliphatische oder aromatische Ring gegebenenfalls durch mindestens ein Heteroatom, das aus der Gruppe bestehend aus Stickstoff, Sauerstoff und Schwefel ausgewählt ist, substituiert ist; und Rₕ₁ und Rₕ₂ wie in Anspruch 4 definiert sind, wodurch die Zusammensetzung (INT²) erhalten wird, die Folgendes umfasst:
- ein (Per) fluorpolyether-Polymer [Polymer P^{bif-INT2}], umfassend eine Kette (R_{pf}) mit zwei Kettenenden, die an entgegengesetzte Seiten der Kette (R_{pf}) gebunden sind, wobei beide Kettenenden eine Gruppe der Formel:
-O-Rₓ₁-CH(OH)-Rₓ₂-N(R^{h1})(R^{h2})
umfassen, wobei Rₓ₁, Rₓ₂, Rₕ₁ und Rₕ₂ wie oben definiert sind,
- gegebenenfalls im Gemisch mit einem (Per) fluorpolyether-Polymer [Polymer P^{monof-INT2}], umfassend eine Kette (R_{pf}) mit zwei Kettenenden, die an entgegengesetzte Seiten der Kette (R_{pf}) gebunden sind, wobei ein Kettenende eine Perfluoralkylgruppe umfasst und das andere Kettenende eine Gruppe der Formel:
-O-Rₓ₁-CH(OH)-Rₓ₂-N(R^{h1})(R^{h2})
umfasst, wobei Rₓ₁, Rₓ₂, Rₕ₁ und Rₕ₂ wie oben definiert sind.

11. Zusammensetzung (INT²), umfassend:
- ein (Per) fluorpolyether-Polymer [Polymer P^{bif-INT2}], umfassend eine Kette (R_{pf}) mit zwei Kettenenden, die an entgegengesetzte Seiten der Kette (R_{pf}) gebunden sind, wobei beide Kettenenden eine Gruppe der Formel:
-O-Rₓ₁-CH(OH)-Rₓ₂-N(R^{h1})(R^{h2})
umfassen, wobei Rₓ₁, Rₓ₂, Rₕ₁ und Rₕ₂ wie oben definiert sind,
- gegebenenfalls im Gemisch mit einem (Per) fluorpolyether-Polymer [Polymer P^{monof-INT2}], umfassend eine Kette (R_{pf}) mit zwei Kettenenden, die an entgegengesetzte Seiten der Kette (R_{pf}) gebunden sind, wobei ein Kettenende eine Perfluoralkylgruppe umfasst und das andere Kettenende eine Gruppe der Formel:
-O-Rₓ₁-CH(OH)-Rₓ₂-N(R^{h1})(R^{h2})
umfasst, wobei Rₓ₁, Rₓ₂, Rₕ₁ und Rₕ₂ wie oben definiert sind.

12. Verfahren [Verfahren (M3)] zur Herstellung von Polymeren (P^{P-bif}) und (P^{P-monof}) gemäß einem der Ansprüche 2 bis 6, wobei das Verfahren (M3) die folgenden Schritte umfasst:
(iv) Inkontaktbringen der Zusammensetzung (INT2) gemäß Anspruch 11 mit einer aus Alkylhalogeniden, Benzylhalogeniden, Alkylsulfonat und Alkylarylsulfonat ausgewählten Verbindung zur Umwandlung von Gruppen der Formel -O-Rₓ₁-CH(OH)-Rₓ₂-N(R^{h1})(R^{h2}) in -O-Rₓ₁-CH(OH)-Rₓ₂-N⁺(R^{h1})(R^{h2})(R^{h3}),
wobei Rₓ₁, Rₓ₂ wie oben definiert sind,
Rₕ₁ und Rₕ₂ wie in Anspruch 5 definiert sind und
R^{h3} für eine lineare oder verzweigte Alkyl- oder Alkoxykette mit 1 bis 30 Kohlenstoffatomen, die gegebenenfalls durch eine oder mehrere -OH-Gruppen substituiert ist und gegebenenfalls eine Poly(oxy)alkylenkette umfasst, einen cycloaliphatischen Ring mit 5 oder 6 Gliedern oder eine Benzylgruppe steht;
(v) Inkontaktbringen der in Schritt (iv) erhaltenen Mischung mit einer Verbindung, die aus der Gruppe bestehend aus
- einer Verbindung [A] mit mindestens einer Gruppe (U) gemäß obiger Definition und mindestens einem Halogenatom oder mindestens einer Isocyanatgruppe; oder
- einer Verbindung [B] mit mindestens einer Gruppe (E) gemäß obiger Definition und mindestens einem Halogenatom oder mindestens einer Isocyanatgruppe; oder
- einer Verbindung [C] mit mindestens einer Gruppe (Si) gemäß obiger Definition und mindestens einem Halogenatom oder mindestens einer Isocyanatgruppe ausgewählt wird, wodurch das Polymer (P^{P-bif}) oder das Polymer (P^{P-monof}) erhalten wird.

13. Zusammensetzung [Zusammensetzung (DIL)], umfassend die Zusammensetzung (C^{P}) gemäß Anspruch 7 und mindestens ein Lösungsmittel [Lösungsmittel (S)], das aus der Gruppe umfassend (per)fluorierte Fluide, die gegebenenfalls mindestens eine ungesättigte Gruppierung umfassen, und hydrierte Fluide, die gegebenenfalls mindestens eine ungesättigte Gruppierung umfassen, ausgewählt ist.

14. Verfahren zum Ausrüsten eines Artikels mit antimikrobiellen Eigenschaften, wobei das Verfahren Folgendes umfasst:
(a) Bereitstellen des Polymers (P^{P}) gemäß einem der Ansprüche 1 bis 6 oder der Zusammensetzung (C^{P}) gemäß Anspruch 7 oder der Zusammensetzung (DIL) gemäß Anspruch 13;
(b) Bereitstellen eines Artikels mit mindestens einer Oberfläche;
(c) Inkontaktbringen der Zusammensetzung (C^{P}) bzw. Zusammensetzung (DIL) und mindestens eines Teils der mindestens einen Oberfläche;
(d) Beschichten des mindestens einen Teils der mindestens einen Oberfläche mit der Zusammensetzung (C^{P}) bzw. Zusammensetzung (DIL).

15. Verfahren nach Anspruch 14, wobei der Artikel aus Artikeln aus Kunststoff, Metall, Glas, Papier oder Textil ausgewählt wird.

## Revendications

1. Polymère de (per)fluoropolyéther [(polymère (P^{p})] comprenant une chaîne de (per)fluoropolyéther [chaîne (R_{Pf})] ayant deux extrémités de chaîne [chaînes (Re)] liées à des côtés opposés de ladite chaîne (R_{Pf}),
- une première extrémité de chaîne comprenant au moins un groupe comprenant un groupe sel d'ammonium quaternaire [groupe (N⁺)] et au moins un groupe choisi dans le groupe constitué par : alcoxysilane [groupe (Si)] et un groupe réticulable, préférablement choisi parmi un groupement insaturé [groupe (U)] et époxy [groupe (E)] ; et
- la deuxième extrémité de chaîne comprenant soit un groupe perfluoroalkyle, soit un groupe sel d'ammonium quaternaire [groupe (N⁺)] et au moins un groupe choisi dans le groupe constitué par : alcoxysilane [groupe (Si)] et un groupe réticulable, préférablement choisi parmi un groupement insaturé [groupe (U)] et époxy [groupe (E)].

2. Polymère (P^{p}) selon la revendication 1, ledit polymère (P^{p}) étant :
- un polymère de (per)fluoropolyéther bifonctionnel [polymère (P^{P-bif})] comprenant une chaîne de (per)fluoropolyéther [chaîne (R_{Pf})] ayant deux extrémités de chaîne [chaînes (Re)] liées à des côtés opposés de ladite chaîne (R_{Pf}), les deux extrémités de chaîne comprenant au moins un groupe comprenant un groupe sel d'ammonium quaternaire [groupe (N⁺)] et au moins un groupe choisi dans le groupe constitué par : alcoxysilane [groupe (Si)] et un groupe réticulable, préférablement choisi parmi un groupement insaturé [groupe (U)] et époxy [groupe (E)] ; ou
- un polymère (per)fluoropolyéther monofonctionnel [polymère (P^{p-monof})] comprenant une chaîne de (per)fluoropolyéther [chaîne (R_{Pf})] ayant deux extrémités de chaîne [chaînes (Re)] liées à des côtés opposés de ladite chaîne (R_{Pf}), une extrémité de chaîne portant un groupe perfluoroalkyle et l'autre extrémité de chaîne comprenant au moins un groupe sel d'ammonium quaternaire [groupe (N⁺)] et au moins un groupe choisi dans le groupe constitué par: alcoxysilane [groupe (Si)] et un groupe réticulable, préférablement choisi parmi un groupement insaturé [groupe (U)] et époxy [groupe (E)].

3. Polymère (P^{p}) selon la revendication 1 ou 2, ladite chaîne (R_{Pf}) étant une chaîne de formule
-D-(CFX^{#})_{z1}-O(R_{f})(CFX*)_{z2}-D*-
z1 et z2, égaux ou différents l'un de l'autre, étant égaux ou supérieurs à 1 ;
X^{#} et X*, égaux ou différents l'un de l'autre, étant -F ou -CF₃,
à condition que lorsque z1 et/ou z2 sont supérieurs à 1, X^{#} et X* sont -F ;
D et D*, égaux ou différents l'un de l'autre, étant une liaison sigma, une chaîne alkylène comprenant de 1 à 6 atomes de carbone, ladite chaîne alkyle étant éventuellement substituée par au moins un groupe perfluoroalkyle comprenant de 1 à 3 atomes de carbone ; (R_{f}) comprenant, préférablement étant constitué par, des motifs répétitifs R°, lesdits motifs répétitifs étant indépendamment choisis dans le groupe constitué par :
(i) -CFXO-, X étant F ou CF₃ ;
(ii) -CFXCFXO-, X, égaux ou différents en chaque occurrence, étant F ou CF₃, à la condition qu'au moins l'un parmi X soit -F ;
(iii) -CF₂CF₂CW₂O-, chacun parmi W, égaux ou différents l'un de l'autre, étant F, Cl, H ;
(iv) -CF₂CF₂CF₂CF₂O- ;
(v) -(CF₂)ⱼ-CFZ-O-, j étant un entier de 0 à 3 et Z étant un groupe de formule générale -O-R_{(f-a)}-T, R_{(f-a)} étant une chaîne fluoropolyoxyalcène comprenant un nombre de motifs répétitifs de 0 à 10, lesdits motifs répétitifs étant choisis parmi les suivants : -CFXO- , -CF₂CFXO-, - CF₂CF₂CF₂O-, -CF₂CF₂CF₂CF₂O-, chacun parmi X étant indépendamment F ou CF₃ et T étant un groupe perfluoroalkyle en C₁-C₃.

4. Polymère (P^{p}) selon la revendication 1 ou 2, ledit groupe (N⁺) étant choisi dans le groupe comprenant :
(N⁺-I) -N⁺(R^{h1})(R^{h2})(R^{h3})
chacun parmi R^{h1}, R^{h2}, et R^{h3} étant indépendamment choisi parmi une chaîne alkyle linéaire ou ramifiée ayant de 1 à 20 atomes de carbone, ladite chaîne alkyle étant éventuellement substituée par un ou plusieurs groupes - OH ; benzyle ou au moins deux parmi R^{h1}, R^{h2}, et R^{h3} conjointement avec l'atome d'azote formant un cycle aliphatique comprenant 4 ou 5 atomes de carbone et l'atome d'azote.

5. Polymère (P^{p}) selon la revendication 1 ou 2, ledit groupe (U) étant choisi dans le groupe constitué par :
(U-I) -O-C(=O)-CR_{H}=CH₂
(U-II) -O-C(=O)-NH-CO-CR_{H}=CH₂
(U-III) -O-C(=O)-R^{A}-CR_{H}=CH₂
R_{H} étant H ou un groupe alkyle en Ci-Ce ;
R^{A} étant choisi dans le groupe constitué par (R^{A}-I) et (R^{A}-II) : 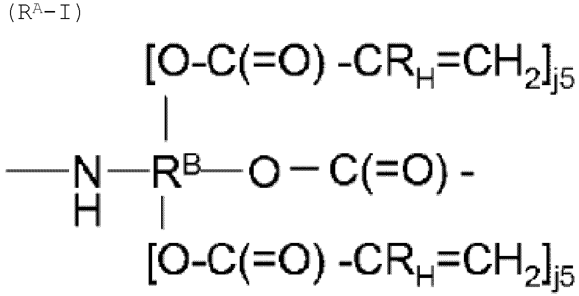
chacun parmi j5 étant indépendamment 0 ou 1 et
R^{B} étant un groupe divalent, trivalent ou tétravalent choisi dans le groupe constitué par un groupe aliphatique en C₁-C₁₀ ; un groupe cycloaliphatique en C₃-C₁₂ ; un groupe aromatique ou alkylaromatique en C₅-C₁₄, éventuellement comprenant au moins un hétéroatome choisi parmi N, O et S ; 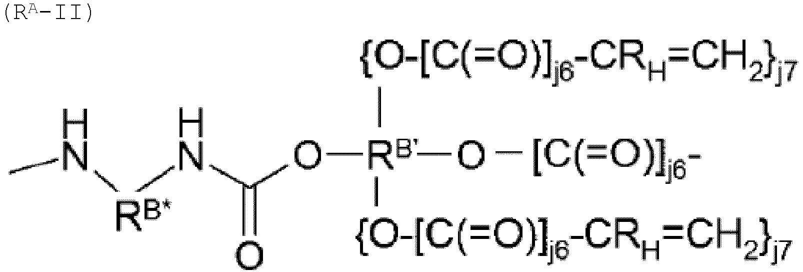
j6 étant 0 ou 1 ;
chacun parmi j7 étant indépendamment 0 ou 1 ;
R^{B'} étant un groupe divalent, trivalent ou tétravalent choisi dans le groupe constitué par un groupe aliphatique en C₁-C₁₀ ; un groupe cycloaliphatique en C₃-C₁₂ ; un groupe aromatique ou alkylaromatique en C₅-C₁₄, éventuellement comprenant au moins un hétéroatome choisi parmi N, O et S ; et
R^{B*} ayant les mêmes significations définies ci-dessus pour R^{B'} ou étant un groupe de formule (R^{B}-I) : 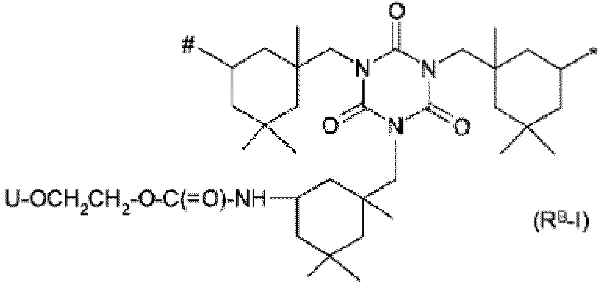
le substituant U étant choisi parmi les groupes (U-I) à (U-III) comme définis ci-dessus et
* et # indiquant le signe de liaison aux atomes d'azote dans la formule (R^{A}-II) ci-dessus.

6. Polymère (P^{p}) selon la revendication 1 ou 2,
- lorsque ladite ou lesdites extrémités de chaîne comprennent ledit groupe (N⁺), ladite ou lesdites chaînes (Re) étant liées à ladite chaîne (R_{pf}) via une liaison sigma ou via une chaîne poly(oxy)alkylène [chaîne (Rₐ)] ;
- lorsque ladite ou lesdites chaînes (Re) comprennent ledit groupe (U), ladite ou lesdites chaînes (Re) étant liées à ladite chaîne (R_{pf}) via un groupe de formule :
*-R¹⁰-NH-C(-O)-O-R¹¹-#
* indiquant la liaison au groupe (U)
# indiquant la liaison à la chaîne (R_{pf})
R¹⁰ étant une chaîne alkyle linéaire ou ramifiée ayant de 1 à 6 atomes de carbone, éventuellement substituée par un groupe comprenant un groupe tri-alcoxy-silyle ;
R¹¹ étant une liaison sigma ou une chaîne poly(oxy)alkylène [chaîne (Rₐ^)], ladite chaîne (Rₐ^) comprenant de 1 à 50 motifs oxyalkylène exempts de fluor, lesdits motifs étant identiques ou différents les uns des autres et étant choisis parmi -CH(J*)CH(J)-O, chacun parmi J et J* étant indépendamment choisi parmi un atome d'hydrogène, alkyle linéaire ou ramifié ou aryle.

7. Composition [composition (C^{p})] comprenant :
- un polymère de (per) fluoropolyéther [polymère (P^{p-bif})] tel que défini dans l'une quelconque des revendications 2 à 6 ; et
- un polymère de (per)fluoropolyéther [polymère (P^{p-monof}] tel que défini dans l'une quelconque des revendications 2 à 6.

8. Procédé [procédé (M1)] pour la fabrication d'une première composition [composition (INT1)], ledit procédé (M1) comprenant les étapes suivantes :
(i) fourniture d'au moins un polymère de (per)fluoropolyéther (PFPE) comprenant : une chaîne de (per)fluoropolyéther [chaîne (R_{Pf})] ayant deux extrémités de chaîne liées à des côtés opposés de ladite chaîne (R_{Pf}), les deux extrémités de chaîne comprenant au moins un groupe -OH [polymère PFPE (bif)] ou un polymère de (per)fluoropolyéther (PFPE) comprenant une chaîne de (per)fluoropolyéther [chaîne (R_{Pf})] ayant deux extrémités de chaîne liées à des côtés opposés de ladite chaîne (R_{Pf}), l'une desdites extrémités de chaîne comprenant au moins un groupe -OH et l'autre extrémité de chaîne comprenant un groupe perfluoroalkyle [polymère PFPE (monof)] ;
(ii) conversion d'au moins une partie des groupes -OH dudit polymère PFPE (bif) ou dudit polymère PFPE (monof) en groupes époxy, obtenant ainsi la composition (INT1) comprenant :
- un polymère de (per) fluoropolyéther [polymère P^{bif-INT1}] comprenant une chaîne (R_{Pf}) ayant deux extrémités de chaîne liées à des côtés opposés de ladite chaîne (R_{Pf}), les deux extrémités de chaîne comprenant un groupe époxy,
- éventuellement en mélange avec un polymère de (per) fluoropolyéther [polymère P^{monof-INT1}] comprenant une chaîne (R_{pf}) ayant deux extrémités de chaîne liées à des côtés opposés de ladite chaîne (R_{pf}), une extrémité de chaîne comprenant un groupe époxy et l'autre extrémité de chaîne comprenant un groupe perfluoroalkyle.

9. Composition (INT1) comprenant :
- un polymère de (per) fluoropolyéther [polymère P^{bif-INT1}] comprenant une chaîne (R_{Pf}) ayant deux extrémités de chaîne liées à des côtés opposés de ladite chaîne (R_{Pf}), les deux extrémités de chaîne comprenant un groupe époxy,
- éventuellement en mélange avec un polymère de (per) fluoropolyéther [polymère P^{monof-INT1}] comprenant une chaîne (R_{pf}) ayant deux extrémités de chaîne liées à des côtés opposés de ladite chaîne (R_{pf}), une extrémité de chaîne comprenant un groupe époxy et l'autre extrémité de chaîne comprenant un groupe perfluoroalkyle.

10. Procédé [procédé (M2)] pour la fabrication d'une composition [composition (INT2)], ledit procédé (M2) comprenant les étapes suivantes :
(iii) mise en contact de la composition (INT1) telle que définie dans la revendication 9, avec au moins un composé portant une amine secondaire ou une amine tertiaire portant un groupe -OH, de sorte à convertir lesdits groupes -O-époxy en groupes de formule :
-O-Rₓ₁-CH(OH)-Rₓ₂-N(R^{h1})(R^{h2})
Rₓ₁ étant une chaîne alkyle linéaire ou ramifiée comprenant de 1 à 6 atomes de carbone, un cycle cycloaliphatique ayant 5 ou 6 chaînons, ou un cycle aromatique ayant 5 ou 6 chaînons, ledit cycle cycloaliphatique ou aromatique étant éventuellement substitué par au moins un hétéroatome choisi dans le groupe constitué par : azote, oxygène et soufre ;
R_{X2} étant une chaîne alkyle ou alcoxy linéaire ou ramifiée comprenant 1 à 30 atomes de carbone, éventuellement substituée par un ou plusieurs groupes -OH et éventuellement comprenant une chaîne poly(oxy)alkylène, un cycle cycloaliphatique ayant 5 ou 6 chaînons, ou un cycle aromatique ayant 5 ou 6 chaînons, ledit cycle cycloaliphatique ou aromatique étant éventuellement substitué par au moins un hétéroatome choisi dans le groupe constitué par : azote, oxygène et soufre ; et
Rₕ₁ et Rₕ₂ étant tels que définis dans la revendication 4, obtenant ainsi une composition (INT²) comprenant :
- un polymère de (per)fluoropolyéther [polymère Rbif-INT2] comprenant une chaîne (R_{pf}) ayant deux extrémités de chaîne liées à des côtés opposés de ladite chaîne (R_{Pf}), les deux extrémités de chaîne comprenant un groupe de formule :
-O-Rₓ₁-CH(OH)-Rₓ₂-N(R^{h1})(R^{h2})
Rₓ₁, R_{X2}, Rₕ₁ et Rₕ₂ étant tels que définis ci-dessus,
- éventuellement en mélange avec un polymère de (per) fluoropolyéther [polymère P^{monof-INT2}] comprenant une chaîne (R_{pf}) ayant deux extrémités de chaîne liées à des côtés opposés de ladite chaîne (R_{pf}), une extrémité de chaîne comprenant un groupe perfluoroalkyle et l'autre extrémité de chaîne comprenant un groupe de formule :
-O-Rₓ₁-CH(OH)-Rₓ₂-N(R^{h1}XR^{h2})
Rₓ₁, Rₓ₂, Rₕ₁ et Rₕ₂ étant tels que définis ci-dessus.

11. Composition (INT²) comprenant :
- un polymère de (per) fluoropolyéther [polymère P^{bif-INT2}] comprenant une chaîne (R_{pf}) ayant deux extrémités de chaîne liées à des côtés opposés de ladite chaîne (R_{Pf}), les deux extrémités de chaîne comprenant un groupe de formule :
-O-Rₓ₁-CH(OH)-Rₓ₂-N(R^{h1})(R^{h2})
Rₓ₁, Rₓ₂, Rₕ₁ et Rₕ₂ étant tels que définis ci-dessus,
- éventuellement en mélange avec un polymère de (per) fluoropolyéther [polymère P^{monof-INT2}] comprenant une chaîne (R_{pf}) ayant deux extrémités de chaîne liées à des côtés opposés de ladite chaîne (R_{pf}), une extrémité de chaîne comprenant un groupe perfluoroalkyle et l'autre extrémité de chaîne comprenant un groupe de formule:
-O-Rₓ₁-CH(OH)-Rₓ₂-N(R^{h1})(R^{h2})
Rₓ₁, Rₓ₂, Rₕ₁ et Rₕ₂ étant tels que définis ci-dessus.

12. Procédé [procédé (M3)] pour la fabrication de polymères (P^{P-bif}) et (P^{p-monof}) tels que définis dans l'une quelconque des revendications 2 à 6, ledit procédé (M3) comprenant les étapes de :
(iv) mise en contact de la composition (INT2) telle que définie dans la revendication 11 avec un composé choisi parmi : halogénures d'alkyle, halogénures de benzyle, sulfonate d'alkyle et sulfonate d'alkylaryle,
de sorte à convertir des groupes de formule
-O-Rₓ₁-CH(OH)-Rₓ₂-N(R^{h1})(R^{h2})
en
-O-Rₓ₁-CH(OH)-Rₓ₂-N⁺(R^{h1})(R^{h2})(R^{h3})
Rₓ₁ et Rₓ₂ étant tels que définis ci-dessus Rₕ₁ et Rₕ₂ étant tels que définis dans la revendication 5, et
R^{h3} étant une chaîne alkyle ou alcoxy linéaire ou ramifiée comprenant 1 à 30 atomes de carbone, éventuellement substituée par un ou plusieurs groupes -OH et éventuellement comprenant une chaîne poly(oxy)alkylène, un cycle cycloaliphatique ayant 5 ou 6 chaînons, ou un groupe benzyle ;
(v) mise en contact du mélange obtenu dans l'étape (iv) avec un composé choisi dans le groupe constitué par :
- un composé [A] portant au moins un groupe (U) tel que défini ci-dessus, et au moins un atome d'halogène ou au moins un groupe isocyanate ; ou
- un composé [B] portant au moins un groupe (E) tel que défini ci-dessus, et au moins un atome d'halogène ou au moins un groupe isocyanate ; ou
- un composé [C] portant au moins un groupe (Si) tel que défini ci-dessus, et au moins un atome d'halogène ou au moins un groupe isocyanate,
obtenant ainsi un polymère (P^{P-bif}) ou un polymère (P^{p-monof}).

13. Composition [composition (DIL)] comprenant une composition (C^{p}) telle que définie dans la revendication 7 et au moins un solvant [solvent (S)] choisi dans le groupe comprenant : fluides (per)fluorés, éventuellement comprenant au moins un groupement insaturé ; fluides hydrogénés, éventuellement comprenant au moins un groupement insaturé.

14. Procédé pour conférer des propriétés antimicrobiennes à un article, ledit procédé comprenant :
(a) fourniture d'un polymère (P^{p}) tel que défini dans l'une quelconque des revendications 1 à 6 ou d'une composition (C^{p}) telle que définie dans la revendication 7 ou d'une composition (DIL) telle que définie dans la revendication 13 ;
(b) fourniture d'un article ayant au moins une surface ;
(c) mise en contact de ladite composition (C^{p}) ou composition (DIL) et d'au moins une partie de ladite au moins une surface ;
(d) revêtement de ladite au moins une partie de ladite au moins une surface par ladite composition (C^{p}) ou composition (DIL).

15. Procédé selon la revendication 14, ledit article étant choisi parmi des articles composés de matière plastique, de métal, de verre, de papier ou de textile.
